(19) Europäisches Patentamt
European Patent Office
Office européen des brevets

(11) Numéro de publication : 0 341 102 B1

(12) # FASCICULE DE BREVET EUROPEEN

(45) Date de publication du fascicule du brevet : **01.07.92 Bulletin 92/27**

(51) Int. Cl.$^5$ : **C05G 3/00,** B01J 2/30

(21) Numéro de dépôt : **89400923.2**

(22) Date de dépôt : **04.04.89**

(54) **Produits, compositions et traitements antimottants pour sels, engrais simples et complexes.**

(30) Priorité : **07.04.88 FR 8804614**

(43) Date de publication de la demande : **08.11.89 Bulletin 89/45**

(45) Mention de la délivrance du brevet : **01.07.92 Bulletin 92/27**

(84) Etats contractants désignés : **AT BE CH DE ES GB GR IT LI LU NL SE**

(56) Documents cités :
**EP-A- 0 188 969**
**FR-A- 2 460 706**
**GB-A- 742 636**
**NL-A- 8 300 043**
**CHEMICAL ABSTRACTS, vol. 102, no. 19, 13 may 1985, page 547, résumé no. 165899n, Columbus, Ohio, US;**

(73) Titulaire : **COMPAGNIE FRANCAISE DE PRODUITS INDUSTRIELS**
**28, Boulevard Camélinat B.P. 75**
**F-92233 Gennevilliers Cédex (FR)**

(72) Inventeur : **Schapira, Joseph**
**32, rue Miollis**
**F-75015 Paris (FR)**
Inventeur : **Cheminaud, Jean-Claude**
**10, rue Dunand**
**F-95220 Herblay (FR)**
Inventeur : **Petitbon, Pascal**
**19, rue Edmond Darbois**
**F-92230 Gennevilliers (FR)**
Inventeur : **Chaillou, Daniel**
**8, rue de la Mutualité**
**F-95110 Sannois (FR)**

(74) Mandataire : **Koch, Gustave et al**
**Cabinet PLASSERAUD 84, rue d'Amsterdam**
**F-75009 Paris (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet des produits, des compositions et traitements antimottants pour empêcher la prise en masse des sels, engrais simples et complexes.

Parmi les sels et engrais simples concernés par l'invention, on peut citer les sels azotés tels que les nitrates d'ammonium, de potassium et de calcium ainsi que les sulfates mono-ammonique et diammonique et les engrais contenant de l'urée.

Les engrais complexes sont des mélanges binaires ou ternaires des éléments du groupe constitué par l'azote, le phosphore ou le potassium; ces engrais sont identifiés par des formules du type $N_x$ $P_y$ $K_z$ dans lesquelles x, y, z représentent des nombres qui désignent respectivement les pourcentages d'azote, d'anhydride phosphorique et de $K_2O$ dans le mélange constituant l'engrais complexe.

Tous les engrais subissent en général une prise en masse ou mottage lors du stockage.

La tendance au mottage est plus ou moins forte selon:

– le procédé de granulation, le grain pouvant se trouver sous forme de granulés, de grains, de billes, de sphérules, de petits cylindres ou de prills; l'engrais peut également être compacté,

– l'origine des matières premières constitutives de l'engrais,

– la nature des additifs introduits dans la masse avant granulation.

Parmi les nombreux facteurs qui influent sur le mottage, on peut citer:

– l'humidité intrinsèque de l'engrais ainsi que l'humidité extérieure,

– la température,

– le temps de stockage,

– la pression de stockage,

– le polymorphisme structural notamment les transitions de phase du nitrate d'ammonium,

– la forme physique et la composition chimique du grain.

La prise en masse peut parfois atteindre des proportions telles que l'engrais prend la forme d'une masse dure, compacte ou de blocs importants extrêmement difficiles à déliter; l'engrais n'est alors plus utilisable tel quel. Dans le cas d'un stockage en silo, la prise en masse peut être telle que la croûte formée doit être brisée à l'aide de moyens mécaniques lourds. Le stockage, la manipulation et l'épandage de l'engrais sont rendus plus difficiles, la prise en masse entraînant alors un surcoût économique important et inacceptable.

Pour lutter contre la prise en masse, on a proposé de recourir à des produits organiques tels que les tensio-actifs anioniques et cationiques, formulés dans des dérivés huileux ou cireux et associés éventuellement avec d'autres produits tels que certains polymères ou des tensio-actifs non ioniques.

Parmi les tensio-actifs cationiques proposés, on peut citer les huiles aminées.

Parmi les tensio-actifs anioniques déjà proposés, on peut citer

– les alcoylaryl-sulfonates d'amine dont la mise en oeuvre est décrite dans le brevet France N° 2.460.706 de la Société Demanderesse,

– les sels d'amines des esters de phosphates acides dont la mise en oeuvre, en association avec une huile minérale, une cire microcristalline et une cire macrocristalline, est décrite dans le brevet européen N° 113 687, ainsi que

– les sels de potassium des esters de phosphate acide dont la mise en oeuvre est décrite dans le brevet URSS SU 1.131.859.

Ces produits selon l'art antérieur donnent généralement satisfaction mais, devant les exigences toujours plus grandes des utilisateurs, la Société Demanderesse a poursuivi ses recherches en vue de mettre au point des produits encore plus efficaces.

Et elle a eu le mérite de trouver que, de façon surprenante et inattendue, la mise en oeuvre simultanée des deux types d'agents antimottants constitués respectivement par les sels d'amines des acides alcoylaryl-sulfoniques et les sels d'amines des esters de phosphates acides potentialisait les propriétés antimottantes de chacun des deux types d'agents, ce qui permet d'avoir recours, dans le cas de leur utilisation simultanée conforme à l'invention, à une quantité de matière active inférieure à celle qui est nécessaire pour obtenir un même effet antimottant lorsqu'on utilise l'un ou l'autre des deux types d'agents seuls, ladite utilisation simultanée permettant de plus, toujours pour le même effet antimottant, de réduire, voire de supprimer les charges d'enrobage généralement nécessaires.

Grâce à l'invention, il devient possible de résoudre le problème de la prise en masse d'engrais très sensibles au phénomène de mottage, tels que les nitrates d'ammonium contenant des sulfates dans la masse ou les engrais complexes.

Il s'ensuit que le produit antimottant conforme à l'invention pour sels, engrais simples et complexes est essentiellement constitué par une combinaison d'un ou plusieurs sels d'amines d'acides alcoylaryl-sulfoniques et d'un ou plusieurs sels d'amines d'esters de phosphates acides, en présence éventuellement d'un excès

d'amine, ladite combinaison pouvant être préparée par neutralisation ou "surneutralisation" d'un mélange du ou des acides alcoylaryl-sulfoniques et du ou des esters de phosphates acides à l'aide d'une ou de plusieurs amines.

Par le terme "acides alcoylaryl-sulfoniques", on désigne les mélanges d'acides mono-, di- ou trisulfoniques dont la partie aromatique, de préférence benzénique ou naphtalénique, plus particulièrement naphtalénique, est mono- ou polyalcoyl-substituée, le degré de substitution étant un degré moyen correspondant aux rapports molaires alcoyle/aryle utilisés pour la synthèse, étant entendu que, pour chacun des degrés de substitution envisagés, à savoir généralement de 1 à 4, il est possible de se trouver en présence de mélanges complexes d'isomères d'acides sulfoniques; de préférence, le nombre total d'atomes de carbone de la partie alcoyle ne dépasse pas 16 dans les mélanges en question.

A titre d'exemple, on indique que, dans le cas de l'acide 1,3-isopropyl-naphtalène-sulfonique, le rapport molaire moyen isopropyl/naphtalène est égal à 1,3.

Par le terme "esters de phosphates acides" qui peuvent être préparés par réaction directe d'un composé à groupement hydroxyle tel qu'un alcool, alcoylphénol ou alcoylnaphtol avec, par exemple, l'anhydride phosphorique, on désigne de préférence ceux qui répondent aux formules générales:

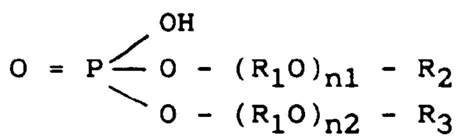

et

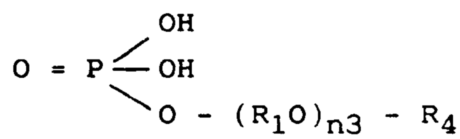

(I) (II)

dans lesquelles

– $R_1$ représente un groupe alcoylène ayant de 2 à 4 atomes de carbone,

– $R_2$, $R_3$ et $R_4$ représentent un groupe alcoyle ayant de 8 à 20 atomes de carbone ou un groupe alcoylaryle dont la partie alcoylée a de 8 à 12 atomes de carbone, et

– $n_1$, $n_2$ et $n_3$ représentent un nombre de 0 à 15 et préférentiellement de 0 à 5.

En général, la réaction rappelée ci-dessus de préparation de ces esters conduit à des mélanges de mono-et diesters.

Pour des raisons économiques, on choisit souvent un mélange de composés à groupement hydroxyle, par exemple un mélange d'alcools gras.

Pour la préparation du produit antimottant conforme à l'invention, on réalise un mélange d'acides alcoylaryl-sulfoniques et d'esters de phosphates acides, mélange qui est ensuite neutralisé et même "surneutralisé" par une ou plusieurs amines.

En tant qu'amine, on a de préférence recours à des alcoylamines, des cycloalcoylamines ou à des amines aromatiques et éventuellement à des alcanolamines, lesdites amines pouvant être primaires, secondaires ou tertiaires.

L'amine peut être oxyalcoylénée.

Avantageusement on a recours aux alcoylamines grasses et préférentiellement aux alcoylamines --ou à des mélanges de telles amines-- dont le nombre d'atomes de carbone varie de 12 à 20; la stéarylamine technique ou amine de suif hydrogéné donne de bons résultats.

Lorsqu'il y a surneutralisation, celle-ci ne dépasse pas 25% d'excès molaire d'amine et est préférentiellement limitée à 10%.

L'invention a également pour objet des compositions antimottantes comprenant, outre les susdits produits antimottants conformes à l'invention, au moins un autre produit antimottant choisi avantageusement dans le groupe des acides gras et de leurs sels ainsi qu'au moins un agent de formulation choisi avantageusement dans le groupe comprenant les huiles minérales et leurs mélanges avec des cires macrocristallines.

Parmi les acides gras, on a recours avantageusement à ceux ayant de 12 à 20 atomes de carbone et préférentiellement à l'acide stéarique.

Parmi les sels d'acides gras, on a recours avantageusement aux sels de calcium ou magnésium et préférentiellement d'aluminium ; encore plus particulièrement, on a recours à un sel d'aluminium dans lequel le rapport molaire "aluminium/acide stéarique" est voisin de 2.

On utilise généralement les huiles à caractère paraffinique ou naphténique, par exemple

– l'huile naphténique commercialisée par la Société NYNAS sous la marque NYTEX et répondant aux spécifications suivantes:

- densité : 0,894
- viscosité cinématique à 40°C : 23 cSt
- composition en hydrocarbures :
  . aromatiques : 10%
  . naphténiques : 46%
  . paraffiniques : 44%, ou

– l'huile paraffinique commercialisée par BP France sous la marque ENERPAR et répondant aux spécifications suivantes:

- densité : 0,925
- viscosité cinématique à 40°C : 620 cSt
- composition en hydrocarbures :
  . aromatiques : 12%
  . naphténiques : 22%
  . paraffiniques : 66%.

Lorsque la formulation est réalisée à l'aide d'une cire macrocristalline, on a avantageusement recours à une cire de paraffine ayant les caractéristiques suivantes:

- Point de fusion : 58-60°C
- Viscosité cinématique à 100°C : 9 cSt
- Pénétration à 25°C : 16
- Température de blocking : 40.

Les susdites compositions antimottantes conformes à l'invention sont fréquemment du type I ou II définis ci-après dans le tableau A et différant l'un de l'autre par les proportions des constituants.

**TABLEAU A**

| Constituant en % en poids | Composition de type I | Composition de type II |
| --- | --- | --- |
| Produit antimottant conforme à l'invention | 5 - 35 | 60 - 100 |
| Acide gras ou un de ses sels | 0 - 10 | 0 - 10 |
| Huile minérale | 20 - 90 | 0 - 30 |
| Cire macrocristalline | 0 - 50 | 0 - 15 |

Dans les types I et II, le produit antimottant conforme à l'invention comprend:
– de 15 à 85% d'acides alcoylarylsulfoniques,
– de 85 à 15% d'esters de phosphates acides et préférentiellement
– de 30 à 70% d'acides alcoylarylsulfoniques,
– de 70 à 30% d'esters de phosphates acides.

Le traitement antimottant conforme à l'invention est caractérisé par le fait qu'on incorpore à un sel, engrais simple ou complexe, de préférence en sortie de tambour ou de lit fluidisé, le produit traité ayant alors acquis la presque totalité de ses propriétés mécaniques finales, une quantité efficace du produit antimottant conforme à l'invention, de préférence mis en oeuvre sous la forme de la composition antimottante conforme à l'invention.

La susdite quantité efficace en produit conforme à l'invention est avantageusement de 0,005 à 0,05% en poids par rapport aux sel, engrais simple ou complexe.

Plus particulièrement, on incorpore à un sel, engrais simple ou complexe,

– soit une composition antimottante du type I, par pulvérisation, en une quantité de 0,03 à 0,4% et, de préférence, de 0,05 à 0,2% en poids par rapport au produit traité, cette pulvérisation pouvant être suivie ou précédée par un enrobage à l'aide d'une charge du groupe comprenant la craie, la terre d'infusoire, le talc, les argiles ou autres,

– soit une charge dite dopée obtenue par traitement à l'aide d'une composition antimottante du type II d'une charge du groupe comprenant la craie, la terre d'infusoire, le talc, les argiles, la proportion de composition II par rapport à la charge étant de 1 à 10%, de préférence de 1 à 6% en poids, ladite charge dopée étant mise en oeuvre par enrobage à raison de 0,1 à 1%, de préférence de 0,2 à 0,6% en poids par rapport au produit traité,

étant entendu que, dans les deux cas, la proportion de produit antimottant conforme à l'invention introduite dans les sels, engrais simples ou complexes est comprise entre 0,005 et 0,05% en poids par rapport à la masse de sels, engrais simples ou complexes traités.

Il est connu qu'il n'est pas souhaitable de préparer la charge dopée en utilisant des produits contenant trop d'huile.

L'enrobage d'un sel, engrais simple ou complexe à l'aide d'une charge dopée est généralement suivi de la pulvérisation d'une huile, d'une vaseline ou de produits cireux. Le fuel lourd est également très utilisé. Ces matières servent à coller la charge et à éviter la poussière.

En sortie de tambour refroidisseur ou en fin de lit fluidisé, la température du produit traité est généralement inférieure à 40°C et souvent inférieure à 32°C, ce qui correspond pour le nitrate d'ammonium, à la température de transition des phases IV à III bien connue des fabricants. L'humidité est en général, à ce stade, inférieure à 1%.

Dans certains cas particuliers, le traitement antimottant peut se faire sur un engrais partiellement refroidi entre 80 et 40°C. Le refroidissement est alors poursuivi après l'incorporation de l'antimottant.

Dans le cas de la mise en oeuvre d'une composition antimottante de type I, celle-ci peut être pulvérisée à une température d'environ 80°C par un système approprié permettant sa répartition homogène sur l'engrais; la quantité d'enrobant dont l'application éventuelle suit ou précède celle de la composition antimottante de type I, peut atteindre 2% en poids par rapport au produit traité mais ne dépasse le plus souvent pas 0,5%.

Avantageusement, les compositions antimottantes selon l'invention permettent d'éviter l'emploi d'enrobants minéraux dont l'influence sur le réenvolement de la poussière est bien connue.

Pour illustrer les propriétés antimottantes des produits conformes à l'invention, on a procédé à un certain nombre d'essais comparatifs.

Pour ces essais, on utilise une bétonnière dans laquelle on applique sur 20 kg d'engrais un traitement antimottant selon l'invention.

L'engrais est ensuite conditionné dans des sacs en polyéthylène puis empilé dans un module de mottage du type de celui illustré par la figure unique.

Ce module de mottage comprend une armature métallique constituée de montants 1, d'un plateau de charge 2, d'entretoises 3 et d'un plateau fixe 4.

Des sacs 5 en polyéthylène, remplis de produit à tester, sont empilés comme montré sur le plateau 2.

Un plateau 6 portant un coussin de levage 7 est posé sur la pile de sacs. En gonflant le coussin à l'air comprimé entre le plateau mobile 6 et le plateau fixe 4, on transmet une pression à la pile de sacs.

Cette pression appliquée est variable et peut simuler une pile de sacs de 12 m de haut.

L'engrais est maintenu sous pression pendant un temps plus ou moins long, en général de 10 à 45 jours, parfois de plusieurs mois. A la fin du test, les sacs sont ouverts, les mottes sont pesées et la dureté des mottes est mesurée à l'aide d'un dynamomètre.

Le mottage est exprimé en pourcentage de mottes (entre 0 et 100). En général, la dureté des mottes est comprise entre 0 et 100 N mais peut atteindre 200 N pour les témoins non traités.

On définit un indice de mottage comme étant le produit du pourcentage de mottes par la dureté des mottes.

Chaque mesure résulte de la moyenne de plusieurs sacs (en général 4 sacs).

EXEMPLE 1

On applique un traitement d'antimottage à un engrais complexe granulé NPK de formule 15.12.24 en utilisant

– une composition antimottante A conforme à l'invention,

– une composition antimottante B comportant l'un des deux agents entrant dans la constitution du produit antimottant de la composition A,

– une composition C comportant l'autre des deux agents entrant dans la constitution du produit antimottant de la composition A,

– une composition antimottante selon l'art antérieur.

La composition antimottante A est constituée

– à raison de 15% en poids du produit de la neutralisation d'un mélange à 66% en poids d'acide 1,3-isopropyl naphtalènesulfonique et à 37% en poids d'un lauryl phosphate acide à 3 moles d'oxyde d'éthylène par la stéarylamine,

– à raison de 60% en poids d'une huile minérale,

– à raison de 25% en poids d'une cire macrocristalline.

La composition antimottante B est constituée

– à raison de 15% en poids du produit de la neutralisation d'un acide 1,3-isopropyl naphtalènesulfonique par la stéarylamine,

– à raison de 60% en poids d'une huile minérale,

– à raison de 25% en poids d'une cire macrocristalline.

La composition antimottante C est constituée

– à raison de 15% en poids du produit de la neutralisation d'un lauryl phosphate acide à 3 moles d'oxyde d'éthylène (mélange 50/50 molaire de mono- et diesters) par la stéarylamine,

– à raison de 60% en poids d'une huile minérale,

– à raison de 25% en poids d'une cire macrocristalline.

Les compositions antimottantes A, B et C sont appliquées par pulvérisation à 80°C à raison de 0,15% en poids par rapport à l'engrais, cette application étant précédée de l'application d'une argile inerte à raison de 0,3% en poids par rapport à l'engrais.

La composition antimottante selon l'art antérieur est constituée par une argile dopée à 3% en poids de stéarylamine. Elle est appliquée à raison de 0,6% en poids par rapport à l'engrais, cette application étant suivie de la pulvérisation de 0,2% en poids par rapport à l'engrais, d'une vaseline.

L'engrais traité est conditionné dans des sacs de polyéthylène et est soumis à un test de mottage dans le module de mottage décrit plus haut. La durée de l'empilage est de 20 jours sous une pression de 1,5 $kg/cm^2$.

A l'issue de ce test, les sacs sont ouverts avec précaution. Les mottes sont pesées et la dureté des mottes est mesurée à l'aide d'un dynamomètre.

Les résultats de ces mesures sont réunis dans le tableau B.

TABLEAU B

| Traitement | % mottage | Dureté des mottes | Indice de mottage |
|---|---|---|---|
| Argile dopée à 3% d'amine 0,6 %<br>Huile minérale 0,2 %<br>(art antérieur) | 88 | 62 | 5500 |
| Argile 0,3 %<br>Composition A 0,15%<br>(selon l'invention) | 35 | 46,5 | 1630 |
| Argile 0,3 %<br>Composition B 0,15% | 71 | 59 | 4200 |
| Argile 0,3 %<br>Composition C 0,15% | 50 | 47 | 2400 |
| Témoin non traité | 100 | 160 | 16000 |

Les résultats réunis dans le tableau B montrent qu'il est possible de diminuer la dose d'enrobant de moitié par rapport à un antimottant constitué d'une charge dopée commerciale et que la combinaison d'agents antimottants selon l'invention fait apparaître une potentialisation des propriétés antimottantes des deux matières actives constitutives de la combinaison.

EXEMPLE 2

On applique un traitement d'antimottage à un nitrate d'ammonium titrant 33,5% d'azote et contenant 3% de sulfate d'ammonium dans la masse. L'engrais est traité à 30°C.

On effectue quatre essais dans lesquels le traitement antimottant consiste respectivement en une pulvérisation à 80°C de 0,1% en poids par rapport à l'engrais des compositions antimottantes D, E et F décrites cidessous, et d'une composition antimottante selon l'art antérieur constituée par une huile aminée commerciale contenant 18% de stéarylamine et pulvérisée dans les mêmes conditions.

La composition D est constituée:

- à raison de 19% en poids du produit de la neutralisation d'un mélange à 66% en poids d'un acide 1,3-isopropyl naphtalènesulfonique et à 37% en poids d'un lauryl phosphate acide (mélange 50/50 de mono- et diesters) par la stéarylamine,
- à raison de 6% en poids d'acide stéarique,
- à raison de 50% en poids d'une huile minérale,
- à raison de 25% en poids d'une cire macrocristalline.

La composition E est constituée:

- à raison de 19% en poids du produit de la neutralisation d'un acide 1,3-isopropyl naphtalènesulfonique par la stéarylamine,
- à raison de 6% en poids d'acide stéarique,
- à raison de 50% en poids d'une huile minérale et
- à raison de 25% en poids d'une cire macrocristalline.

La composition F est constituée:

- à raison de 19% en poids du produit de la neutralisation d'un lauryl phosphate acide (mélange 50/50 de mono- et diesters) par la stéarylamine,
- à raison de 6% en poids d'acide stéarique,
- à raison de 50% en poids d'une huile minérale et

– à raison de 25% en poids d'une cire macrocristalline.

Les compositons D, E et F sont appliquées à raison de 0,1% en poids par rapport à l'engrais.

On soumet l'engrais traité au test décrit à l'exemple 1 et on effectue les mêmes mesures.

Les résultats de ces mesures sont réunis dans le tableau C.

TABLEAU C

| Traitement | % mottage | Dureté des mottes | Indice de mottage |
|---|---|---|---|
| Composition D (selon l'invention) | 6 | 20 | 120 |
| Composition E | 50 | 55 | 2750 |
| Composition F | 27 | 45 | 1200 |
| Huile aminée commerciale (selon l'art antérieur) | 25 | 39 | 1000 |
| Témoin non traité | 100 | 200 | 20000 |

Les résultats réunis dans le tableau C montrent que la combinaison conforme à l'invention fait apparaître une potentialisation des propriétés antimottantes par rapport aux propriétés de chacun des agents constitutifs de la combinaison pris isolément et formulés de la même manière.

EXEMPLE 3

On applique un traitement d'antimottage à un engrais complexe NPK de formule 16.10.5 connu pour être difficile à antimotter et qui se trouve à une température de 35°C.

On a recours à une composition G conforme à l'invention constituée

– à raison de 10% en poids du produit de la neutralisation par la stéarylamine d'un mélange à 75% en poids d'acide 1,3-isopropylnaphtalène sulfonique et à 25% en poids d'un alcoyl phosphate acide (mélange 50/50 molaire de mono- et diesters) dont la partie alcoyle est constituée par une chaîne comprenant essentiellement un mélange en C16 et en C18,

– à raison de 90% en poids d'une huile minérale.

On applique d'abord, à raison de 0,3% en poids par rapport à l'engrais, une argile puis on pulvérise à 80°C la composition G à raison de 0,2% en poids par rapport à l'engrais.

On effectue deux expériences comparatives à l'aide de deux compositions selon l'art antérieur, désignées par "Témoin n°1" et "Témoin n°2".

Le Témoin n°1 est un alcoylaryl sulfonate commercialisé par la Société Demanderesse sous la marque "GALORYL ATH 24". Il est mis en oeuvre dans le cadre d'un traitement qui consiste en un enrobage à l'aide de 0,7% en poids par rapport à l'engrais d'une argile, suivi de la pulvérisation à 80°C de 0,2% en poids par rapport à l'engrais d'un mélange contenant 15% en poids du Témoin n°1 dans du fuel lourd n°2.

Le Témoin n°2 est constitué par de la vaseline. Il est mis en oeuvre dans le cadre d'un traitement qui consiste en un enrobage à raison de 0,5% en poids par rapport à l'engrais d'une argile dopée à 3% en poids d'une composition à base de stéarylamine, suivi de la pulvérisation à 80°C de 0,2% en poids par rapport à l'engrais, dudit témoin.

On soumet l'engrais traité au test décrit à l'exemple 1 et on effectue les mêmes mesures.

Les résultats de ces mesures sont réunis dans le tableau D.

TABLEAU D

| Traitement | % mottage | Dureté des mottes | Indice de mottage |
|---|---|---|---|
| Témoin n°1 ( 0,7 % argile ( 0,03% GALORYL ATH 24 ( 0,17% fuel lourd | 74 | 96 | 7100 |
| Témoin n°2 ( 0,5 % argile dopée ( 0,2 % vaseline | 95 | 85 | 8070 |
| Composition G ( 0,3 % argile ( 0,2 % composition G | 50 | 43 | 2150 |
| Témoin non traité | 100 | 20 | 20000 |

Les résultats réunis dans le tableau D montrent que, sur un engrais extrêmement difficile à antimotter, l'invention permet de diminuer les quantités d'enrobant minéral, donc de diminuer le taux de réenvolement de la poussière de façon significative tout en améliorant les performances antimottantes.

La composition antimottante G ne comprend pas de cire macrocristalline.

EXEMPLE 4

On applique un traitement d'antimottage à un engrais complexe granulé NPK de formule 15.12.24 en utilisant:

- des compositions antimottantes H et I conformes à l'invention,
- la composition antimottante B de l'exemple 1,
- une composition antimottante J comportant l'autre des deux agents entrant dans la constitution du produit antimottant des compositions H et I,
- une composition antimottante selon l'art antérieur.

La composition antimottante H est constituée

- à raison de 15% en poids du produit de la neutralisation d'un mélange à 65% en poids d'acide 1,3-isopropyl naphtalènesulfonique et à 35% en poids d'un alcoylphosphate acide défini dans la composition J, par la stéarylamine,
- à raison de 60% en poids d'une huile minérale et
- à raison de 25% en poids d'une cire macrocristalline.

La composition antimottante I est constituée de la même façon que la composition H, à la différence près que les 60% en poids d'une huile minérale sont remplacés par un mélange de 57% d'huile minérale et 3% de stéarate d'aluminium.

La composition antimottante J est constituée

- à raison de 15% en poids du produit de la neutralisation d'un alcoylphosphate acide (mélange 50/50 molaire de mono- et diester) dont la partie alcoyle est constituée par une chaîne comprenant essentiellement un mélange en $C_8$ et en $C_{10}$ par la stéarylamine,
- à raison de 60% en poids d'une huile minérale et
- à raison de 25% en poids d'une cire macrocristalline.

Les compositions antimottantes B, H, I et J sont appliquées par pulvérisation à 80°C à raison de 0,15% en poids par rapport à l'engrais, cette application étant précédée de l'application d'une argile inerte à raison de 0,3% en poids par rapport à l'engrais.

La composition selon l'art antérieur est constituée par une argile dopée à 3% en poids de stéarylamine.

Elle est appliquée à raison de 0,6% en poids par rapport à l'engrais, cette application étant suivie de la pulvérisation d'une vaseline à raison de 0,2% en poids par rapport à l'engrais,.

L'engrais traité est conditionné dans des sacs de polyéthylène et est soumis à un test de mottage dans le module de mottage décrit plus haut. La durée de l'empilage est de 40 jours sous une pression de 1,5 $kg/cm^2$.

A l'issue de ce test, les sacs sont ouverts avec précaution. Les mottes sont pesées et la dureté des mottes est mesurée à l'aide d'un dynamomètre.

Les résultats de ces mesures sont réunis dans le tableau E.

TABLEAU E

| Traitement | | % mottage | Dureté des mottes | Indice de mottage |
|---|---|---|---|---|
| Argile dopée à 3% d'amine<br>Huile minérale<br>(art antérieur) | 0,6 %<br>0,2 % | 89 | 79 | 7030 |
| Argile<br>Composition B | 0,3 %<br>0,15% | 62 | 52 | 3220 |
| Argile<br>Composition H<br>(selon l'invention) | 0,3 %<br>0,15% | 42 | 46 | 1930 |
| Argile<br>Composition I<br>(selon l'invention) | 0,3 %<br>0,15% | 31 | 51 | 1580 |
| Argile<br>Composition J | 0,3 %<br>0,15% | 48 | 52 | 2500 |

Cet exemple illustre la potentialisation des propriétés antimottantes des deux matières actives constitutives de la composition associées au stéarate d'aluminium.

EXEMPLE 5

On applique un traitement d'antimottage à un nitrate d'ammoniaque titrant 33,3% et contenant 4% de sulfate d'ammonium dans la masse. L'engrais est traité à 30°C.

On effectue quatre essais dans lesquels le traitement antimottant consiste respectivement en une pulvérisation à 80°C de 0,1% en poids par rapport à l'engrais des compositions antimottantes K, L et M décrites ci-dessous, et d'une composition antimottante selon l'art antérieur constituée par une huile aminée commerciale contenant 18% de stéarylamine et pulvérisée dans les mêmes conditions.

La composition K conforme à l'invention est constituée:

- à raison de 22% en poids du produit de la neutralisation d'un mélange à 55% en poids d'un acide tributylnaphtalènesulfonique et à 45% en poids d'un stéarylphosphate acide (mélange 50/50 de mono- et diesters) par la stéarylamine,
- à raison de 10% en poids d'acide stéarique,
- à raison de 45% en poids d'une huile paraffinique,
- à raison de 23% en poids d'une cire macrocristalline.

La composition L comporte l'un des deux agents entrant dans la constitution du produit antimottant de la composition K.

Elle est constituée:

- à raison de 22% en poids du produit de la neutralisation d'un acide tributylnaphtalènesulfonique par la stéarylamine,

– à raison de 10% en poids d'acide stéarique,
– à raison de 45% en poids d'une huile paraffinique et
– à raison de 23% en poids d'une cire macrocristalline.

La composition M comporte l'autre des deux agents entrant dans la constitution du produit antimottant de la composition K. Elle est constituée:

– à raison de 22% en poids du produit de la neutralisation d'un stéarylphosphate acide (mélange 50/50 mono- et diesters) par la stéarylamine,
– à raison de 10% en poids d'acide stéarique,
– à raison de 45% en poids d'une huile paraffinique et
– à raison de 23% en poids d'une cire macrocristalline.

On soumet l'engrais traité au test décrit à l'exemple 1 et on effectue les mêmes mesures. La durée de l'empilage est, dans ce cas, de 45 jours sous une pression de 1 kg/cm².

Les résultats de ces mesures sont réunis dans le tableau F.

**TABLEAU F**

| Traitement | % mottage | Dureté des mottes | Indice de mottage |
|---|---|---|---|
| Composition K (selon l'invention) | 45 | 30 | 1350 |
| Composition L | 95 | 80 | 7600 |
| Composition M | 95 | 72 | 6840 |
| Huile aminée commerciale (selon l'art antérieur) | 67 | 32 | 2140 |
| Témoin non traité | 100 | 200 | 20000 |

Les résultats réunis dans le tableau F montrent que la combinaison conforme à l'invention fait apparaître une potentialisation des propriétés antimottantes par rapport aux propriétés de chacun des agents constitutifs de la combinaison pris isolément et formulés de la même manière.

## EXEMPLE 6

On applique un traitement d'antimottage à un engrais complexe NPK de formule 15.11.22 connu pour être difficile à antimotter et qui se trouve à une température de 35°C en utilisant, par pulvérisation à une proportion de 0,1% en poids par rapport à l'engrais traité, une composition antimottante N conforme à l'invention et une composition antimottante selon l'art antérieur constituée par une argile dopée à raison de 3% en poids de stéarylamine.

La composition N est constituée:

– à raison de 15% en poids du produit de la neutralisation d'un mélange à 50% d'un acide 1,3-isopropylnaphtalènesulfonique et à 50% d'un laurylphosphate acide (mélange 50/50 molaire de mono- et diesters) par la stéarylamine,
– à raison de 60% en poids d'une huile minérale et
– à raison de 25% en poids d'une cire macrocristalline.

TABLEAU G

| Traitement | % mottage | Dureté des mottes | Indice de mottage |
|---|---|---|---|
| Composition N (selon l'invention) | 37 | 35 | 1300 |
| Témoin ( 0,6% argile dopée ( 0,2% vaseline | 44 | 47 | 2070 |
| Témoin non traité | 100 | 160 | 16000 |

Cet exemple illustre le fait qu'une composition selon l'invention permet la suppression de l'enrobant minéral.

Avantageusement, cette performance antimottante remarquable s'accompagne d'une suppression du réenvolement de la poussière.

EXEMPLE 7

On applique un traitement d'antimottage à un engrais à base d'urée granulée avec une charge dans la masse en utilisant une composition antimottante O conforme à l'invention et une composition antimottante selon l'art antérieur.

La composition antimottante O est constituée:

- à raison de 19% en poids du produit de la neutralisation d'un mélange à 75% d'un acide 1,3-isopropylnaphtalènesulfonique et à 25% d'un laurylphosphate acide (mélange 50/50 molaire de mono- et diesters) par la stéarylamine,
- à raison de 5% en poids d'acide stéarique,
- à raison de 53% en poids d'une huile minérale et
- à raison de 23% en poids d'une cire macrocristalline.

La composition antimottante selon l'art antérieur est constituée par une solution aqueuse commerciale d'un alcoylsulfate associé à un polymère soluble type éthylène acétate de vinyle.

Les compositions antimottantes sont pulvérisées sur l'engrais à raison de 0,1% en poids par rapport à l'engrais.

Le test est celui décrit à l'exemple 1. La durée de l'empilage est de 20 jours sous une pression de 1 $kg/cm^2$.

TABLEAU H

| Traitement | % mottage | Dureté des mottes | Indice de mottage |
|---|---|---|---|
| Solution selon l'art antérieur | 100 | 47 | 4700 |
| Composition O selon l'invention | 30 | 22 | 660 |
| Témoin non traité | 100 | 60 | 6000 |

Cet exemple illustre les propriétés antimottantes d'une composition selon l'invention.

EXEMPLE 8

On a testé comparativement à la composition K décrite à l'exemple 5, les formules appelées "coating mixture A, B et C" décrites dans le brevet EP 113 687.

Les essais sont réalisés sur un nitrate d'ammonium 33,5% contenant 4% de sulfate d'ammonium.

Le traitement consiste en une pulvérisation à 80°C de 0,1% en poids par rapport à l'engrais des différentes compositions antimottantes.

On soumet l'engrais traité au test décrit à l'exemple 1 et on effectue les mêmes mesures. La durée de l'empilage est, dans ce cas, de 45 jours sous une pression de 1 kg/cm$^2$.

Les résultats sont réunis dans le tableau I.

TABLEAU I

| Traitement | % mottage | Dureté des mottes | Indice de mottage |
|---|---|---|---|
| Composition K selon l'invention | 45 | 50 | 1350 |
| Coating mixture A | 100 | 100 | 10000 |
| Coating mixture B | 100 | 100 | 10000 |
| Coating mixture C | 100 | 100 | 10000 |

Cet exemple illustre la supériorité décisive des compositions antimottantes selon l'invention par rapport à l'art antérieur sur un engrais ayant une très forte tendance à la prise en masse.

## Revendications

1. Produit antimottant pour sels, engrais simples et complexes caractérisé par le fait qu'il est essentiellement constitué par une combinaison d'un ou plusieurs sels d'amines d'acides alcoylaryl-sulfoniques et d'un ou plusieurs sels d'amines d'esters de phosphates acides, en présence éventuellement d'un excès d'amine.

2. Produit selon la revendication 1, caractérisé par le fait qu'il est constitué par une combinaison comprenant de 15 à 85% d'acides alcoylarylsulfoniques et de 85 à 15% d'esters de phosphates acides, ces proportions étant de préférence respectivement de 30 à 70% et de 70 à 30%.

3. Produit selon l'une des revendications 1 et 2, caractérisé par le fait que l'acide alcoylarylsulfonique est un mélange d'acides mono-, di- ou trisulfoniques dont la partie aromatique, de préférence benzénique ou naphtalénique, plus particulièrement naphtalénique, est mono- ou polyalcoyl-substituée, le degré de substitution étant un degré moyen correspondant aux rapports molaires alcoyle/aryle utilisés pour la synthèse, étant entendu que, pour chacun des degrés de substitution envisagés, à savoir généralement de 1 à 4, il est possible de se trouver en présence de mélanges complexes d'isomères d'acides sulfoniques, le nombre total d'atomes de carbone de la partie alcoyle ne dépassant pas de préférence 16 dans les mélanges en question.

4. Produit selon l'une des revendications 1 à 3, caractérisé par le fait que l'acide alcoylarylsulfonique choisi est l'acide 1,3-isopropyl-naphtalène-sulfonique.

5. Produit selon l'une des revendications 1 à 4, caractérisé par le fait que les esters de phosphates acides répondent aux formules générales:

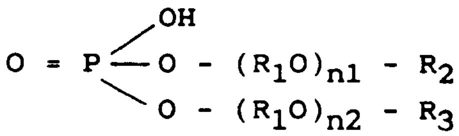

et

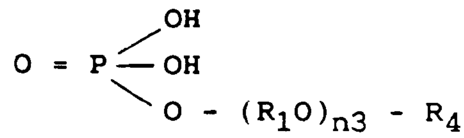

(I) (II)

dans lesquelles

– $R_1$ représente un groupe alcoylène ayant de 2 à 4 atomes de carbone,

– $R_2$, $R_3$ et $R_4$ représentent un groupe alcoyle ayant de 8 à 20 atomes de carbone ou un groupe alcoylaryle dont la partie alcoylée a de 8 à 12 atomes de carbone, et

– $n_1$, $n_2$ et $n_3$ représentent un nombre de 0 à 15 et préférentiellement de 0 à 5.

6. Produit selon l'une des revendications 1 à 5, caractérisé par le fait que l'amine est choisie dans le groupe des alcoylamines, des cycloalcoylamines ou des amines aromatiques et éventuellement des alcanolamines, ladite amine pouvant être oxyalcoylénée.

7. Produit selon la revendication 5, caractérisé par le fait que l'amine est une alcoylamine dont le nombre d'atomes de carbone varie de 12 à 20.

8. Produit selon la revendication 5, caractérisé par le fait que l'amine est constituée par la stéarylamine technique.

9. Produit selon l'une des revendications 1 à 8, caractérisé par le fait que l'excès d'amine est inférieur à 25% molaire et, de préférence, limité à 10%.

10. Composition antimottante pour sels, engrais simples et complexes, caractérisée par le fait qu'elle comprend au moins l'un des produits antimottants selon l'une des revendications 1 à 9, au moins un autre produit antimottant choisi avantageusement dans le groupe des acides gras et de leurs sels, ainsi qu'au moins un agent de formulation choisi avantageusement dans le groupe comprenant les huiles minérales et leurs mélanges avec des cires macrocristallines.

11. Composition selon la revendication 10, caractérisée par le fait que l'acide gras entrant dans sa constitution a de 12 à 20 atomes de carbone et est constitué de préférence par l'acide stéarique.

12. Composition selon l'une des revendications 10 et 11, caractérisée par le fait que le sel d'acide gras est choisi dans le groupe comprenant les sels de calcium, de magnésium et d'aluminium et est constitué de préférence par un sel d'aluminium dans lequel le rapport molaire aluminium/acide stéarique est voisin de 2.

13. Composition selon l'une des revendications 10 à 12, caractérisée par le fait qu'elle est dite de type I et qu'elle comporte

– de 5 à 35% en poids de produit antimottant selon l'une des revendications 1 à 9,

– de 0 à 10% d'un acide gras ou de l'un de ses sels,

– de 20 à 90% en poids d'huile minérale et

– de 0 à 50% en poids de cire macrocristalline.

14. Composition selon l'une des revendications 10 à 12, caractérisée par le fait qu'elle est dite de type II et qu'elle comporte

– de 60 à 100% en poids de produit antimottant selon l'une des revendications 1 à 9,

– de 0 à 10% d'un acide gras ou de l'un de ses sels,

– de 0 à 30% en poids d'huile minérale et

– de 0 à 15% en poids de cire macrocristalline.

15. Traitement antimottant pour sels, engrais simples et complexes, caractérisé par le fait qu'on incorpore à un sel, engrais simple ou complexe, de préférence en sortie de tambour ou de lit fluidisé, le produit traité ayant alors acquis la presque totalité de ses propriétés mécaniques finales, une quantité efficace du produit antimottant selon l'une des revendications 1 à 9, de préférence mis en oeuvre sous la forme de la composition antimottante selon l'une des revendications 10 à 14.

16. Traitement selon la revendication 15, caractérisé par le fait que la quantité efficace en produit antimottant selon l'une des revendications 1 à 9 est de 0,005 à 0,05% en poids par rapport aux sel, engrais simple ou complexe.

17. Traitement selon la revendication 15, caractérisé par le fait qu'on incorpore à un sel, engrais simple ou complexe,

– soit une composition antimottante du type I, par pulvérisation, en une quantité de 0,03 à 0,4% et, de préférence, de 0,05 à 0,2% en poids par rapport au produit traité, cette pulvérisation pouvant être suivie ou précédée par un enrobage à l'aide d'une charge du groupe comprenant la craie, la terre d'infusoire, le talc,

les argiles ou autres,

– soit une charge dite dopée obtenue par traitement à l'aide d'une composition antimottante du type II d'une charge du groupe comprenant la craie, la terre d'infusoire, le talc, les argiles, la proportion de composition II par rapport à la charge étant de 1 à 10%, de préférence de 1 à 6% en poids, ladite charge dopée étant mise en oeuvre par enrobage à raison de 0,1 à 1%, de préférence de 0,2 à 0,6% en poids par rapport au produit traité,

étant entendu que, dans les deux cas, la proportion de produit antimottant selon l'une des revendications 1 à 9, introduite dans les sels, engrais simples ou complexes, est comprise entre 0,005 et 0,05% en poids par rapport à la masse de sels, engrais simples ou complexes traités.

**Patentansprüche**

1. Antibackmittel für Salze, Einnährstoffdünger und Mehrnährstoffdünger, dadurch gekennzeichnet, daß es im wesentlichen aus einer Kombination eines oder mehrerer Aminsalze von Alkylarylsulfonsäuren mit einem oder mehreren Aminsalzen von sauren Phosphatestern, gegebenenfalls in Anwesenheit eines Aminüberschusses, besteht.

2. Produkt nach Anspruch 1, dadurch gekennzeichnet, daß es aus einer Kombination besteht, die 15 bis 85 % Alkylarylsulfonsäuren und 85 bis 15 % saure Phosphatester umfaßt, wobei diese Anteile vorzugsweise 30 bis 70 % und 70 bis 30 % betragen.

3. Produkt nach einem der Ansprüche 1 und 2, dadurch gekennzeichnet, daß die Alkylrarylsulfonsäure ein Gemisch von Mono-, Di- oder Trisulfonsäuren ist, worin der aromatische Teil, vorzugsweise der Phenyl- oder Naphthalinteil, im spezielleren der Naphthalinteil, mono- oder polyalkylsubstituiert ist, wobei der Substitutionsgrad ein mittlerer Grad ist, ensprechend den für die Synthese verwendeten Molverhältnissen Alkyl/Aryl, wobei es sich versteht, daß für jeden angestrebten Substitutionsgrad, nämlich im allgemeinen von 1 bis 4, komplexe Gemische der Sulfonsäureisomeren vorliegen können, und wobei die Gesamtkohlenstoffatomanzahl des Alkylteils vorzugsweise in den in Rede stehenden Gemischen 16 nicht überschreitet.

4. Produkt nach einem der Ansprüche 1 bis 3, dadurch gekennzeichnet, daß die gewählte Alkylarylsulfonsäure die 1,3-Isopropylnaphtalin-sulfonsäure ist.

5. Produkt nach einem der Ansprüche 1 bis 4, dadurch gekennzeichnet, daß die sauren Phosphatester den allgemeinen Formeln

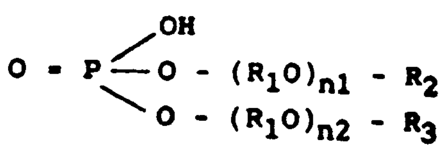

und

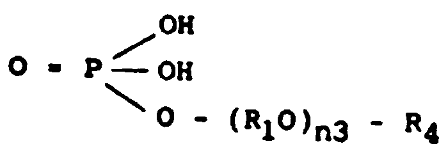

(I)

(II)

entsprechen, worin

– $R_1$ eine Alkylengruppe mit 2 bis 4 Konlenstoffatomen darstellt,

– $R_2$, $R_3$ und $R_4$ eine Alkylgruppe mit 8 bis 20 Kohlenstoffatomen oder eine Alkylarylgruppe bedeuten, deren Alkylteil 8 bis 12 Kohlenstoffatome aufweist, und

– $n_1$, $n_2$ und $n_3$ eine Zahl von 0 bis 15 und vorzugsweise von 0 bis 5 bedeuten.

6. Produkt nach einem der Ansprüche 1 bis 5, dadurch gekennzeichnet, daß das Amin aus der Gruppe der Alkylamine, der Cycloalkylamine oder der aromatischen Amine und gegebenenfalls der Alkanolamine ausgewählt ist, wobei das Amin oxyalkyleniert sein kann.

7. Produkt nach Anspruch 5, dadurch gekennzeichnet, daß das Amin ein Alkylamin ist, dessen Kohlenstoffatomanzahl von 12 bis 20 beträgt.

8. Produkt nach Anspruch 5, dadurch gekennzeichnet, daß das Amin aus technischem Stearylamin besteht.

9. Produkt nach einem Ansprüche 1 bis 8, dadurch gekennzeichnet, daß der Aminüberschuß unter 25 Mol-% beträgt und vorzugsweise auf 10 % beschränkt ist.

10. Antibackzusammensetzung für Salze, Einnährstoffdünger und Mehrnährstoffdünger, dadurch gekennzeichnet, daß es wenigstens eines der Antibackmittel nach einem der Ansprüche 1 bis 9, wenigstens ein weiteres Antibackmittel, vorteilhaft ausgewählt aus der Gruppe der Fettzäuren und deren Salzen, sowie

wenigstens ein Formulierungsmittel umfaßt, das vorteilhaft aus der die Mineralöle und deren Gemische mit makrokristallinen Wachsen umfassenden Gruppe ausgewählt ist.

11. Zusammensetzung nach Anspruch 10, dadurch gekennzeichnet, daß die in ihren Aufbau eingehende Fettsäure 12 bis 20 Kohlenstoffatome aufweist und vorzugsweise aus Stearinsäure besteht.

12. Zusammensetzung nach einem der Ansprüche 10 und 11, dadurch gekennzeichnet, daß das Fettsäuresalz aus der die Calcium-, Magnesium- und Aluminiumsalze umfassenden Gruppe ausgewählt bis und vorzugsweise aus einem Aluminiumsalz besteht, worin das Molverhältnis Aluminium/Stearinsäure nahe dem Wert 2 liegt.

13. Zusammensetzung nach einem der Ansprüche 10 bis 12, dadurch gekennzeichnet, daß sie als Typ I bezeichnet wird und

– 5 bis 35 Gew.-% Antibackmittel nach einem der Ansprüche 1 bis 9,
– 0 bis 10 % einer Fettsäure oder eines ihrer Salze,
– 20 bis 90 Gew.-% Mineralöl und
– 0 bis 50 Gew.-% makrokristallines Wachs umfaßt.

14. Zusammensetzung nach einem der Ansprüche 10 bis 12, dadurch gekennzeichnet, daß sie als Typ II bezeichnet wird und

– 60 bis 100 Gew.-% Antibackmittel nach einem der Ansprüche 1 bis 9,
– 0 bis 10 % einer Fettsäure oder eines ihrer Salze,
– 0 bis 30 Gew.-% Mineralöl und
– 0 bis 15 Gew.-% makrokristallines Wachs umfaßt.

15. Antibackbehandlung für Salze, Einnährstoffdünger und Mehrnährstoffdünger, dadurch gekennzeichnet, daß man einem Salz, Einnährstoffdünger oder Mehrnährstoffdünger, vorzugsweise beim Austritt aus der Trommel oder dem Fließbett, wobei das behandelte Produkt bereits nahezu seine sämtlichen mechanischen Endeigenschaften aufweist, eine wirksame Menge des Antibackmittels nach einem der Ansprüche 1 bis 9 einverleibt, das vorzugsweise in Form der Antibackzusammensetzung nach einem der Ansprüche 10 bis 14 eingesetzt wird.

16. Behandlung nach Anspruch 15, dadurch gekennzeichnet, daß die wirksame Menge an Antibackmittel nach einem der Ansprüche 1 bis 9 0,005 bis 0,05 Gew.-%, bezogen auf das Salz, den Einnährstoffdünger oder den Mehrnährstoffdünger, beträgt.

17. Behandlung nach Anspruch 15, dadurch gekennzeichnet, daß man einem Salz, einem Einnährstoffdünger oder einem Mehrnährstoffdünger

– entweder eine Antibackzusammensetzung vom Typ I durch Aufsprühen in einer Menge von 0,03 bis 0,4 und vorzugsweise von 0,05 bis 0,2 Gew.-%, bezogen auf das behandelte Produkt, wobei diesem Aufsprühen ein Umhüllen mit einem Füllstoff aus der die Kreide, die Infusorienerde, den Talk, die Tone oder andere umfassenden Gruppe folgen oder vorangehen kann,

– oder einen sogenannten dotierten Füllstoff einverleibt, der durch Behandlung eines Füllstoffes aus der die Kreide, die Infusorienerde, den Talk und die Tone umfassenden Gruppe mit einer Antibackzusammensetzung vom Typ II erhalten worden ist, wobei das Verhältnis der Zusammensetzung II zum Füllstoff 1 bis 10, vorzugsweise 1 bis 6 Gew.-% beträgt, wobei der dotierte Füllstoff durch Umhüllen im Ausmaß vom 0,12 bis 1 %, vorzugsweise von 0,2 bis 0,6 Gew.-% bezogen auf das behandelte Produkt, angewendet wird, wobei es sich versteht, daß in beiden Fällen der Anteil des Antibackmittels nach einem der Ansprüche 1 bis 9, der in die Salze, Einnährstoffdünger oder Mehrnährstoffdünger eingebracht wird, von 0,005 bis 0,05 Gew.-%, bezogen auf die Masse der Salze, der Einnährstoffdünger oder der Mehrnährstoffdünger, beträgt.

## Claims

1. Anti-clumping product for salts, simple and complex fertilizers characterized by the fact that it is essentially constituted by a combination of one or several amine salts of alkylaryl-sulphonic acids and of one or several amine salts of acid phosphates esters, in the presence possibly of an excess of amine.

2. Product according to Claim 1, characterized by the fact that it is constituted by a combination comprising from 15 to 85% of alkylaryl-sulphonic acids and 85 to 15% of acid phosphates esters, these proportions being preferably respectively from 30 to 70% and from 70 to 30%.

3. Product according to one of Claims 1 and 2, characterized by the fact that the alkylaryl-sulphonic acid is a mixture of mono-, di- or trisulphonic acids of which the aromatic portion, preferably benzenic or naphthalenic, more particularly naphthalenic, is mono- or polyalkyl-substituted, the degree of substitution being an average degree corresponding to the alkyl/aryl molar ratios used for the synthesis, it being understood that,

for each of the contemplated degrees of substitution, namely generally from 1 to 4, there can happen to be present complex mixtures of isomers of sulphonic acids, the total number of carbon atoms of the alkyl portion preferably not exceeding 16 in the mixtures concerned.

4. Product according to one of Claims 1 to 3, characterized by the fact that the selected alkylaryl-sulphonic acid is 1.3-isopropyl-naphthalene-sulphonic acid.

5. Product according to one of Claims 1 to 4, characterized by the fact that the acid phosphates esters correspond to the general formulae:

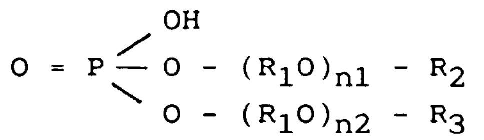

and

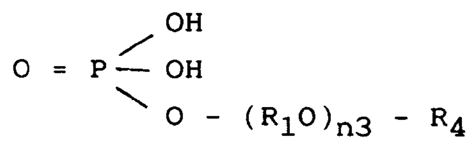

(I) (II)

in which

- $R_1$ represents an alkylene group having from 2 to 4 carbon atoms,
- $R_2$, $R_3$ and $R_4$ represent an alkyl group having from 8 to 20 carbon atoms or an alkylaryl group of which the alkylated portion has from 8 to 12 carbon atoms, and
- $n_1$, $n_2$ and $n_3$ represent a number from 0 to 15 and preferably from 0 to 5.

6. Product according to one of Claims 1 to 5, characterized by the fact that the amine used for neutralization is selected from the group of alkylamines, cycloalkylamines or aromatic amines and possibly alkanolamines, the said amine being possibly oxyalkylenated.

7. Product according to Claim 5, characterized by the fact that the amine is an alkylamine in which the number of carbon atoms varies from 12 to 20.

8. Product according to Claim 5, characterized by the fact that the amine is constituted by technical stearylamine.

9. Product according to one of Claims 1 to 8, characterized by the fact that the excess of amine is less than 25% molar and, preferably, limited to 10%.

10. Anti-clumping composition for salts, simple and complex fertilizers, characterized by the fact that it comprises at least one of the anti-clumping products according to one of Claims 1 to 9, at least one other anti-clumping substance selected advantageously from the group of fatty acids and their salts, as well as at least one formulation agent selected advantageously from the group comprising mineral oils and their mixtures with macrocrystalline waxes.

11. Composition according to Claim 10, characterized by the fact that the fatty acid entering into its constitution has 12 to 20 carbon atoms and is constituted preferably by stearic acid.

12. Composition according to one of Claims 10 and 11, characterized by the fact that the fatty acid salt is selected from the group comprising salts of calcium, magnesium and aluminum and is constituted preferably by an aluminum salt in which the molar ratio aluminum/stearic acid is close to 2.

13. Composition according to one of Claims 10 to 12, characterized by the fact that is so-called of type I and that it comprises

- from 5 to 35% by weight of anti-clumping product according to one of Claims 1 to 9,
- from 0 to 10% of a fatty acid or of one of its salts,
- from 20 to 90% by weight of a mineral oil and
- from 0 to 50% by weight of macrocrystalline wax.

14. Composition according to one of Claims 10 to 12, characterized by the fact that is so-called of type II and that it comprises

- from 60 to 100% by weight of anti-clumping product according to one of Claims 1 to 9,
- from 0 to 10% of a fatty acid or of one of its salts,
- from 0 to 30% by weight of a mineral oil and
- from 0 to 15% by weight of macrocrystalline wax.

15. Anti-clumping treatment for salts, simple or complex fertilizers, characterized by the fact that there is incorporated with a salt, a simple or complex fertilizer, preferably at the exit from the drum or fluidized bed, the treated product having then acquired almost all of its final mechanical properties, an effective amount of the anti-clumping product according to one of Claims 1 to 9, preferably employed in the form of the anti-clumping composition according to one of Claims 10 to 14.

16. Treatment according to Claim 15, characterized by the fact that the effective amount of the anti-clumping product according to one of Claims 1 to 9 is from 0.005 to 0.05% by weight in respect to the salt, simple or complex fertilizer.

17. Anti-clumping treatment according ing to Claim 15, characterized by the fact that there is incorporated with a salt, simple or complex fertilizer,

– either an anti-clumping composition of type I, by spraying, in an amount of 0.03 to 0.4% and, preferably, from 0.05 to 0.2% by weight with respect to the treated product, this spraying being possibly followed or preceded by coating by means of a charge of the group comprising chalk, infusorial earth, talc, clays or the like,

– or a so-called doped charge obtained by treatment by means of an anti-clumping composition of type II of a charge of the group comprising chalk, infusorial earth, talc, clays, the proportion of composition II with respect to the charge being from 1 to 10%, preferably from 1 to 6% by weight, said doped charge being employed by coating in the proportion of 0.1 to 1%, preferably from 0.2 to 0.6% by weight with respect to the treated product,

it being understood that, in both cases, the proportion of anti-clumping product according to one of Claims 1 to 9, introduced into the salts, simple or complex fertilizers is comprised between 0.005 and 0.05% by weight with respect to the mass of salts, simple or complex fertilizers treated.

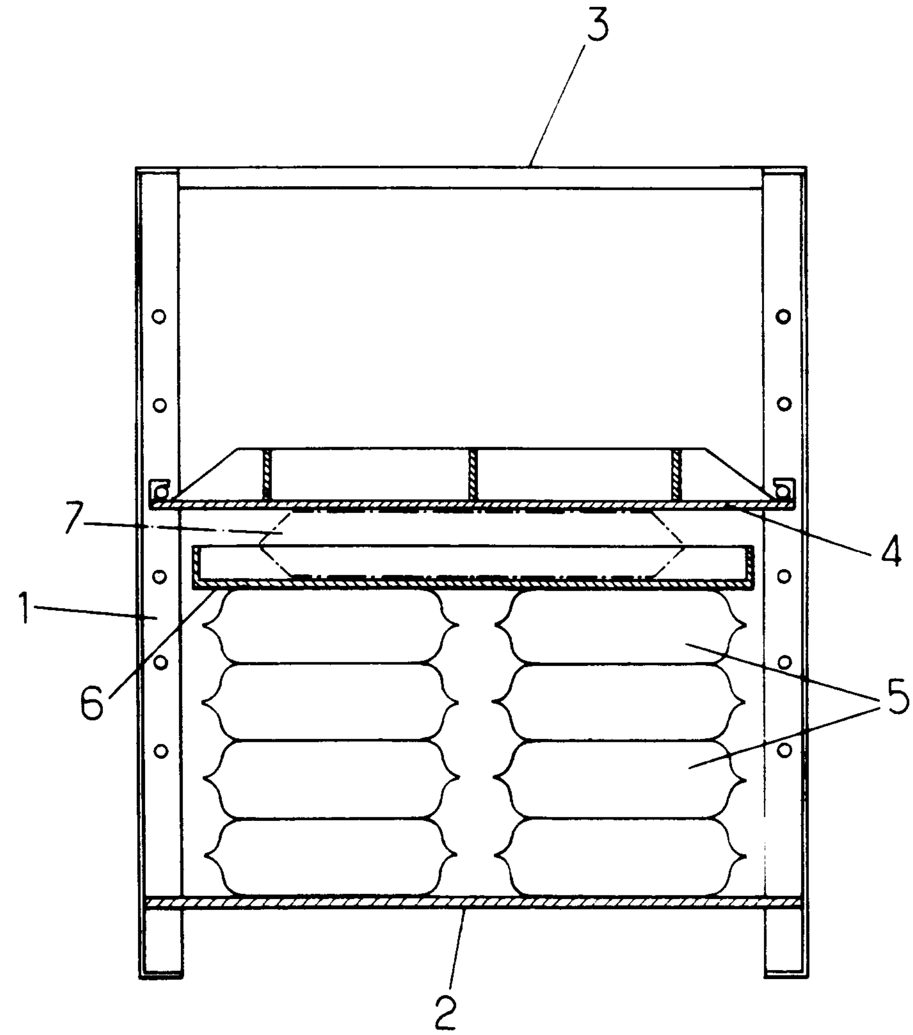
3
7
4
1
6
5
2